# EUROPÄISCHE PATENTSCHRIFT

(11) **EP 0 526 696 B1**
(45) Veröffentlichungstag und Bekanntmachung des Hinweises auf die Patenterteilung: **03.07.1996**
(21) Anmeldenummer: 92106570.2
(22) Anmeldetag: 16.04.1992
(51) Int. Cl.: A23G 3/20

(54) **Vorrichtung zum Vergiessen von zähflüssigen Massen mit eingelagerten festen Bestandteilen**
Casting device for viscous mass containing solid compounds
Dispositif de coulée de masse visqueuse contenant des composants solides

(30) Priorität: 20.04.1991 DE 4112940
(43) Veröffentlichungstag der Anmeldung: 10.02.1993
(73) Patentinhaber: WINKLER & DÜNNEBIER MASCHINENFABRIK UND EISENGIESSEREI KG, D-56564 Neuwied (DE)
(72) Erfinder: Puderbach, Gerhard, W-5450 Neuwied 1 (DE)

(56) Entgegenhaltungen:
- DE-C- 650 120
- US-A- 1 711 750
- US-A- 4 010 284

## Beschreibung

Die Erfindung betrifft eine Vorrichtung zum Vergießen von zähflüssigen Massen mit eingelagerten festen Bestandteilen, insbesondere von Süßwarenmassen mit eingelagerten festen Zutaten wie Rosinen, Nüsse oder dergleichen.

Einsatz findet eine solche Vorrichtung bei der Herstellung sogenannter Fruchtriegel, Müsliriegel oder ähnlicher Produkte. Dazu wird auf einen Grundkörper, zumeist eine quaderförmige Backware, die gewünschte Süßwarenmasse aufgebracht und der Riegel schließlich mit Schokolade überzogen.

Herkömmliche Vorrichtungen sind allerdings nicht geeignet, Süßwarenmasse mit eingelagerten festen Zutaten auf die Backware aufzugießen. Der Grund hierfür ist, daß die festen Zutaten dazu neigen, sich im Eintrittsbereich der Düse gegeneinander zu verkeilen und die Bohrung dadurch zu verstopfen.

So ist aus der DE-C 655 120 eine handbetriebene Auspreßvorrichtung für Konditorei- und Bäckereizwecke bekannt, die einen in ein Mundstück auslaufenden Vorratsbehälter aufweist, in dessen unteren Bereich eine Auspreßschnecke und in dessen oberen Bereich ein mit der Auspreßschnecke mechanisch gekoppelter Kolben angeordnet sind. Vorgesehen ist diese Auspreßvorrichtung für die Verarbeitung von Butter; Süßwarenmassen mit eingelagerten Nüssen oder dgl. würden die kegelige Austrittsdüse in den geschilderten Weise verstopfen. Darüber hinaus ist der durch den Vorratsbehälter geführte Antrieb der Auspreßschnecke aufwendig und die Vorrichtung ist für den kontinuierlichen, maschinellen Einsatz an einer Fertigungsstraße ungeeignet.

Bislang war es daher bei der Herstellung der o.g. Müsliriegel oder dgl. erforderlich, zunächst nur die reine Süßwarenmasse aufzugießen und die festen Zutaten in einem nachgeschalteten Arbeitsgang, mittels einer sogenannten Streueinrichtung, aufzubringen.

Diese Lösung ist sehr aufwendig, zumal bei den großen Arbeitsbreiten der verwendeten Fertigungsstraßen bis zu etwa 50 Düsen nebeneinander angeordnet sein können, denen dann ebensoviele Streueinrichtungen nachzuschalten sind. Darüberhinaus besteht die Gefahr, daß feste Zutaten neben die Riegel fallen oder durch unzureichende Verbindung beim Überziehvorgang vom Riegel abgespült werden.

Aufgabe der Erfindung ist es daher, eine Vorrichtung zu schaffen, die es gestattet, zähflüssige Süßwarenmasse mit eingelagerten festen Zutaten zu vergießen.

Gelöst wird diese Aufgabe der Erfindung dadurch, daß im Bereich des Einlaufs der Austrittsdüse ein schneckengangartiges Abstreiferelement angeordnet ist; das gegenüber der Innenwand der Austrittsdüse eine Relativbewegung ausführt, wobei die Austrittsdüse (2) drehbar, das Abstreiferelement (9) feststehend gelagert ist.

Vorteilhaft an dieser Ausgestaltung der Gießvorrichtung ist es, daß sie es gestattet, die festen Zutaten, wie Rosinen, Nüsse oder dgl. als Bestandteil der Süßwarenmasse über die Austrittsdüse an den Grundkörper aufzutragen. Es entfällt dadurch der Aufwand für die früher erforderlichen, den Düsen nachgeschalteten Streueinrichtungen. Zudem sind die festen Zutaten sicher in der Süßwarenmasse eingeschlossen, und können nicht mehr herunterfallen.

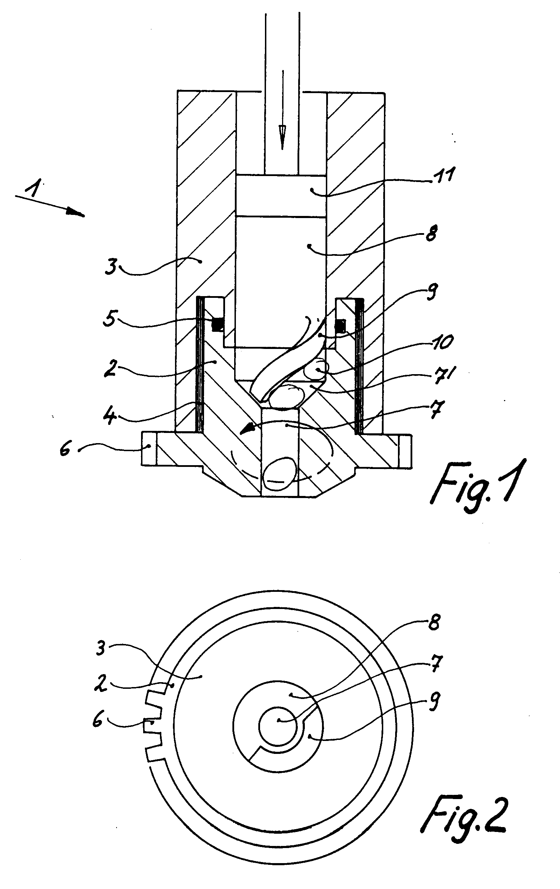

Weitere Merkmale der Erfindung gehen aus den Unteransprüchen sowie aus der nachfolgenden Beschreibung eines in den Fig. 1 und 2 schematisch dargestellten, bevorzugten Ausführungsbeispiels hervor.

Es zeigen:
- Fig. 1: einen Längsschnitt durch eine Düse
- Fig. 2: eine vereinfachte Draufsicht auf Fig. 1 ohne Kolben
üblicherweise weise eine Vorrichtung zum Herstellen von Fruchtriegeln oder dergleichen eine Vielzahl gleichartiger, nebeneinander angeordneten Düsen zum Aufbringen der zähflüssigen Süßwarenmasse auf die Grundkörper auf. Von diesen Düsen soll hier eine einzelne beispielhaft herausgegriffen und näher erläutert werden.

Wie insbesondere aus Fig. 1 ersichtlich, besteht eine solche Düse 1 im wesentlichen aus der Austrittsdüse 2 und ihrer Halterung 3. Die Austrittsdüse 2 ist drehbar auf Lagerschalen 4 in der Halterung 3 gelagert und durch einen O-Ring 5 abgedichtet. Auf ihrem äußeren Umfang trägt die Austrittsdüse 2 eine Verzahnung 6, in der ein nicht dargestelltes Gegenrad eingreift und die Austrittsdüse 2 in Pfeilrichtung in Drehung versetzt. Die Austrittsdüse 2 weist eine Bohrung 7 auf, die sich im Bereich des Einlaufs 7' trichterförmig erweitert auf einen Durchmesser, der gleich ist dem Durchmesser der Bohrung 8 in der Halterung 3. In den Einlauf 7' der Austrittsdüse 2 ragt ein schneckengangartiges Abstreiferelement 9, das starr mit der Halterung 3 verbunden ist. Das Abstreiferelement 9 ist als rechtsgängiger Schneckengang großer Steigung ausgebildet und schmiegt sich, vom unteren Rand der Halterung 3 ausgehend, eng an die Wandung des Einlaufs 7' der Austrittsdüse 2 an, ohne jedoch damit in schabendem Kontakt zu stehen.

Die Wirkungsweise der Vorrichtung ist folgende: Die mit festen Zutaten, z.B. Rosinen 10 versetzte Süßwarenmasse wird über bekannte Einrichtungen, die hier durch einen Kolben 11 angedeutet sind, unter Druck durch die Bohrung 8 der Halterung 3 an den Einlauf 7' der Austrittsdüse 2 herangeführt. Dabei dreht sich die Austrittsdüse 2, angetrieben über ihre Verzahnung 6, mit einigen zehn Umdrehungen pro Minute, wie durch den Pfeil angedeutet, entgegen dem Uhrzeigersinn. Die Süßwarenmasse innerhalb der Austrittsdüse 2 wird durch ihre innere Reibung ebenfalls in Drehung versetzt und dadurch entlang der Unterseite des rechtsgängigen Abstreiferelementes 9 in Richtung Bohrung 7 gelenkt. Auch die Rosinen 10 gelangen mit dem Abstreiferelement 9 in Anlage und werden daran entlanggeführt. Sie reihen sich dort hintereinander auf und gelangen somit nur eine nach der anderen in die Bohrung 7, wodurch ein Verstopfen der Bohrung ausgeschlossen ist.

## Patentansprüche

1. Vorrichtung zum Vergießen von zähflussigen Massen mit eingelagerten festen Bestandteilen, insbesondere von Süßwarenmassen mit eingelagerten Zutaten wie Rosinen, Nüsse oder dgl., mit mindestens einer Austrittsdüse, der die Süßwarenmasse unter Druck zugeleitet wird, wobei im Bereich des Einlaufs (7') der Austrittsdüse (2) ein schneckengangartiges Abstreiferelement (9) angeordnet ist, das gegenüber der Innenwandung der Austrittsdüse (2) eine Relativbewegung ausführt, dadurch gekennzeichnet, daß die Austrittsdüse (2) drehbar, das Abstreiferelement (9) feststehend gelagert ist.

2. Vorrichtung nach Anspruch 1, dadurch gekennzeichnet, daß die Steigungsrichtung des schneckengangartigen Abstreiferelementes (9) und der Drehsinn der Austrittsdüse (2) derart aufeinander abgestimmt sind, daß die von der Düseninnenwandung abgestreifte Masse zur Austrittsbohrung (7) hin geleitet wird.

## Claims

1. Casting device for viscous mass containing solid compounds, particularly for confectionary compositions incorporating ingredients such as raisins, nuts or the like, with at least one discharge nozzle to which the confectionery composition is fed under pressure, a worm-like stripper element (9), which moves relative to the inner wall of the discharge nozzle (2), being disposed in the region of the inlet (7') of the discharge nozzle (2), characterised in that the discharge nozzle (2) is rotatably mounted and the stripper element (9) is fixedly mounted.

2. Apparatus as claimed in Claim 1, characterised in that the pitch direction of the worm-like stripper element (9) and the direction of rotation of the discharge nozzle (2) are matched to one another so that the composition stripped from the inner wall of the nozzle is guided towards the discharge bore (7).

## Revendications

1. Dispositif de coulée de masse visqueuse contenant des composants solides, particulièrement des masses de confiserie avec des ingrédients, p.ex. des raisins, des noisettes, ou produits similairés, avec au moins une buse de sortie, à laquelle la masse de confiserie est conduite sous pression, ayant un racleur à vis sans fin (9) placé dans la section d'entrée (7') de la buse de sortie (2), faisant un mouvement relatif à la paroi intérieure de la buse de sortie (2), caractérisé de manière que la buse de sortie (2) soit pivotante et le racleur (9) soit monté fixe.

2. Dispositif selon la revendication 1, caractérisé en ce que le sens de l'hélice du racleur à vis sans fin (9) et le sens de rotation de la buse, de sortie (2) soient réglés de telle façon que la masse qui est raclée de la paroi intérieurè de la buse soit convoyée au perçage de sortie (7).
